# EUROPÄISCHE PATENTSCHRIFT

(11) **EP 3 559 421 B1**
(45) Veröffentlichungstag und Bekanntmachung des Hinweises auf die Patenterteilung: **30.09.2020**
(21) Anmeldenummer: 17783499.1
(22) Anmeldetag: 12.10.2017
(51) Int. Cl.: F01N 3/20

(54) **HEIZVORRICHTUNG FÜR EINEN TANK EINES ABGASNACHBEHANDLUNGSSYSTEMS, TANKVORRICHTUNG**
HEATING DEVICE FOR A TANK OF AN EXHAUST GAS AFTERTREATMENT SYSTEM, TANK DEVICE
DISPOSITIF DE CHAUFFAGE POUR UN RÉSERVOIR D'UN SYSTÈME DE POST-TRAITEMENT DE GAZ D'ÉCHAPPEMENT, DISPOSITIF DE RÉSERVOIR

(30) Priorität: 22.12.2016 DE 102016226021
(43) Veröffentlichungstag der Anmeldung: 30.10.2019
(73) Patentinhaber: Robert Bosch GmbH, 70442 Stuttgart (DE)
(72) Erfinder: HANNEKE, Juergen, 70499 Stuttgart (DE); SCHREIBER, Ruben, 71640 Ludwigsburg (DE)
(86) Internationale Anmeldenummer: PCT/EP2017/076039
(87) Internationale Veröffentlichungsnummer: WO 2018/114075

(56) Entgegenhaltungen:
- DE-A1-102010 009 182
- DE-A1-102013 217 927
- DE-A1-102013 222 288

## Beschreibung

Die Erfindung betrifft eine Heizvorrichtung für einen Tank eines Abgasnachbehandlungssystems, mit einem Träger und mit mehreren an dem Träger angeordneten Heizelementen.

Weiterhin betrifft die Erfindung eine Tankvorrichtung zur Aufbewahrung und Bereitstellung eines flüssigen Abgasnachbehandlungsmittels für ein Abgasnachbehandlungssystem einer Brennkraftmaschine, insbesondere eines Kraftfahrzeugs, mit einem Tank und mit einer in dem Tank angeordneten Heizvorrichtung.

### Stand der Technik

Heizvorrichtungen und Tankvorrichtungen der eingangs genannten Art sind aus dem Stand der Technik bekannt (siehe beispielsweise die Druckschrift DE 10 2010 009182 A1). Um den Schadstoffgehalt im Abgas von Brennkraftmaschinen bei Kraftfahrzeugen zu reduzieren, ist es bekannt, das Abgas einer Abgasnachbehandlung zu unterziehen. Dazu wird das von der Brennkraftmaschine kommende Abgas unter anderem durch einen oder mehrere Katalysatoren geführt. Um eine besonders vorteilhafte Schadstoff-reduzierende Reaktion herbeizuführen, ist es außerdem bekannt, dem Abgas ein flüssiges Abgasnachbehandlungsmittel zuzufügen, welches stromabwärts in einem Katalysator zusammen mit dem Abgas vorteilhaft reagiert. Insbesondere das sogenannte SCR-Verfahren (SCR=selektive katalytische Reduktion) findet in vielen Kraftfahrzeugen Anwendung.

Weil das Abgasnachbehandlungsmittel zu jeder Jahreszeit zur Verfügung stehen muss, um die Schadstoffemissionen jederzeit reduzieren zu können, ist es wichtig, dass das Abgasnachbehandlungsmittel, das üblicherweise in Form einer wässrigen Harnstofflösung bei niedrigen Umgebungstemperaturen von weniger als -11°C gefriert, aufheizen und auftauen zu können. Hierzu ist es bekannt, in dem das Abgasnachbehandlungsmittel lagernden Tank eine Heizvorrichtung anzuordnen, die ansteuerbar ist, um bei Bedarf gefrorenes Abgasnachbehandlungsmittel aufzutauen.

### Offenbarung der Erfindung

Die erfindungsgemäße Heizvorrichtung mit den Merkmalen des Anspruchs 1 hat den Vorteil, dass die von der Heizvorrichtung zur Verfügung gestellte Wärme zum Auftauen gefrorenen Abgasnachbehandlungsmittels besser in dem Tank verteilt wird als bisher. Insbesondere wird gewährleistet, dass auch von der Entnahmestelle des Abgasnachbehandlungsmittels weiter entfernte Bereiche sicher aufgetaut werden können. Darüber hinaus wird eine einfache Montage der Heizvorrichtung gewährleistet. Erfindungsgemäß ist vorgesehen, dass der Träger mehrere Tragelemente aufweist, die gelenkig miteinander verbunden sind, so wie wenigstens eine Federelement, dass zumindest zwei der Trägerelemente mit einer Federkraft beaufschlagt. Der Träger ist somit insgesamt flexibel beziehungsweise verformbar ausgebildet, wobei durch das Federelement der Träger in eine Endform gedrängt wird.

Das Federelement ist dazu ausgebildet/angeordnet, den Träger aufzuspannen, sodass die Tragelemente auseinander bewegt und in dem Tank verteilt werden. Durch die gelenkige Verbindung ist die flexible Ausbildung des Trägers auf einfache Art und Weise derart gewährleistet, ohne dass sich die Tragelemente vollkommen frei in dem Tank bewegen können. Dadurch kann sichergestellt werden, dass der Träger eine vorbestimmte Form erhält. Dadurch, dass das Federelement zumindest zwei der Trägerelemente mit einer Federkraft beaufschlagt, werden diese zumindest auseinander gedrängt, wenn das Federelement als Druckfeder ausgebildet ist, oder zueinander hingezogen, wenn das Federelement als Zugfeder ausgebildet ist. In jedem Fall wird dadurch eine Bewegung in den Träger eingebracht, die die vorteilhafte Verteilung der Tragelemente bewirkt.

Gemäß einer bevorzugten Weiterbildung der Erfindung ist vorgesehen, dass jeweils zwei der Tragelemente durch zumindest einen Abstandshalter miteinander verbunden sind. Durch den Abstandshalter wird gewährleistet, dass die Tragelemente einen vorbestimmten Abstand nicht überschreiten oder nicht unterschreiten, sodass eine Endform des Trägers durch die Abstandshalter und/oder eine Ausgangsform des Trägers durch die Abstandshalter definiert wird, durch welche eine Montage vereinfacht und der Betrieb im Tank sichergestellt wird.

Bevorzugt ist der jeweilige Abstandshalter als Minimalabstandshalter ausgebildet, sodass ein Mindestabstand zwischen den Tragelementen durch den Abstandshalter gewährleistet ist. Dies hat den Vorteil, dass zum Beispiel zwei Tragelemente nicht zu nah aneinanderliegen. Dies ist besonders dann von Vorteil, wenn die beiden durch den Minimalabstandshalter miteinander verbundenen Tragelemente jeweils ein Heizelement tragen.

Alternativ ist bevorzugt vorgesehen, dass der jeweilige Abstandshalter als Maximalabstandshalter ausgebildet ist, sodass die maximale Entfernung, die die beiden Tragelemente zueinander einnehmen können, durch den Abstandshalter begrenzt ist. Hierdurch wird die maximale Ausdehnung des Trägers in dem Tank begrenzt. Dies hat einen Vorteil in Bezug auf die Verbindungsleitungen, mit welchen beispielsweise die an den Tragelementen angeordneten Heizelemente kontaktiert werden. Durch den Maximalabstandshalter wird gewährleistet, dass diese Verbindungsleitungen beispielsweise nicht überansprucht und dadurch beschädigt werden. Bevorzugt ist zumindest ein Abstandshalter zwischen zwei der Tragelemente der Heizvorrichtung vorhanden. Gemäß einer weiteren bevorzugten Weiterbildung der Erfindung ist vorgesehen, dass zwischen jeweils zwei Tragelementen jeweils ein Abstandshalter entsprechend angeordnet ist. Dabei können alle oder einige der Abstandshalter als Minimalabstandshalter oder Maximalabstandshalter ausgebildet sein. Die Heizvorrichtung kann insbesondere eine Kombination von Minimalabstandshaltern und Maximalabstandshaltern, die zwischen den Tragelementen wirken, aufweisen.

Gemäß einer bevorzugten Weiterbildung der Erfindung ist vorgesehen, dass die Tragelemente als Gelenke des Trägers ausgebildet sind. Dadurch wird die gelenkige Verbindung durch die Tragelemente selbst gewährleistet. Dies erleichtert die Herstellung und die Montage.

Weiterhin ist bevorzugt vorgesehen, dass an mehreren der Tragelemente, insbesondere an jedem Tragelement, jeweils zumindest eines der Heizelemente angeordnet ist. Dadurch ist sichergestellt, dass eine vorteilhafte Wärmeverteilung in dem Tank erfolgt. Besonders bevorzugt sind die Tragelemente und/oder die Abstandshalter außerdem wärmeleitfähig ausgebildet, um die von den Heizelementen erzeugte oder ausgegebene Wärme weiter in dem Tank zu verteilen.

Gemäß einer bevorzugten Ausführung der Erfindung ist vorgesehen, dass zumindest eines der Heizelemente, insbesondere alle Heizelemente, als elektrische Heizelemente ausgebildet sind. Insbesondere ist das jeweilige Heizelement als PTC beziehungsweise Widerstandsheizelement ausgebildet (PTC=positiver Temperatur Koeffizient). Die Heizelemente können jeweils als Einzelheizelemente oder als Bandheizelemente, zum Beispiel mit PTC-Charakteristik, ausgebildet sein. Außerdem ist es auch denkbar, eines der Heizelemente, insbesondere alle Heizelemente, als Flüssigkeitsheizelemente auszubilden, die von einer erhitzten Flüssigkeit durchströmt werden und als Wärmewandler die von der Flüssigkeit mitgeführte Wärme in den Tank abgeben.

Insbesondere ist vorgesehen, dass mehrere Heizelemente an einem flexiblen Heizband angeordnet sind, wobei das Heizband an mehreren Stellen beziehungsweise mit mehreren Tragelementen verbunden ist, sodass durch das Aufstellen der Tragelemente das Heizband in dem Tank aufgespannt wird. Hierdurch ist eine einfache Anordnung der Heizelemente an dem Träger sowie in dem Tank selbst gewährleistet.

Gemäß einer bevorzugten Weiterbildung der Erfindung ist vorgesehen, dass das Federelement als Biegefeder, insbesondere serpentinenförmig in seiner Längserstreckung, ausgebildet ist. Dadurch ist eine kostengünstige Realisierung des Federelements geboten, die ein einfaches Auseinanderdrängen der Tragelemente gewährleistet.

Alternativ ist bevorzugt vorgesehen, dass Federelement als Schraubenfeder ausgebildet ist. Hierdurch können hohe Federkräfte auf kleinem Bauraum gewährleistet werden. Auch ist denkbar, dass der Träger mehrere Federelemente aufweist, wobei zumindest eines der Federelemente als Schraubenfeder und ein anderes der Federelemente als Biegefeder ausgebildet ist.

Weiterhin ist bevorzugt vorgesehen, dass die Tragelemente selbst als Federteile, insbesondere als Schraubenfedern, ausgebildet sind. Dadurch vereinen die Tragelemente die Funktion der Tragstatur mit der der Federstruktur. Gemäß einer bevorzugten Ausführungsform bildet eines der Tragelemente als Federteil das zumindest eine Federelement. Alternativ ist bevorzugt vorgesehen, dass die Tragelemente, oder zumindest eines der Tragelemente, als steifes Trägerteil ausgebildet ist, um den Träger zumindest abschnittsweise in der Art eines Koppelgetriebes auszubilden, sodass eine definierte Bewegung des Trägers erreicht wird, sowie eine definierte Endform, die ein sicheres und vorteilhaftes Anordnen in dem Tank erlaubt.

Die erfindungsgemäße Tankvorrichtung mit den Merkmalen des Anspruchs 10 zeichnet sich durch die erfindungsgemäße Heizvorrichtung aus. Es ergeben sich die bereits genannten Vorteile. Insbesondere ist vorgesehen, dass die Tankvorrichtung eine Öffnung aufweist, deren Querschnitt ausreicht, die Heizvorrichtung im komprimierten Zustand aufzunehmen, sodass die Heizvorrichtung auf einfache Art und Weise in den Tank einführbar ist. Im Inneren des Tanks kann die Heizvorrichtung dann durch das oder die Federelemente aufgespannt werden in eine Form, die ein Hindurchführen durch die Öffnung des Tanks nicht mehr erlauben wird.

Weitere Vorteile und bevorzugte Merkmale und Merkmalskombinationen ergeben sich insbesondere aus dem zuvor Beschriebenen sowie aus den Ansprüchen. Im Folgenden soll die Erfindung anhand der Zeichnungen näher erläutert werden. Dazu zeigen:
- Figur 1A und B: ein erstes Ausführungsbeispiel einer vorteilhaften Tankvorrichtung,
- Figur 2: ein zweites Ausführungsbeispiel der Tankvorrichtung und
- Figur 3: ein drittes Ausführungsbeispiel der Tankvorrichtung, jeweils in einer vereinfachten Darstellung.

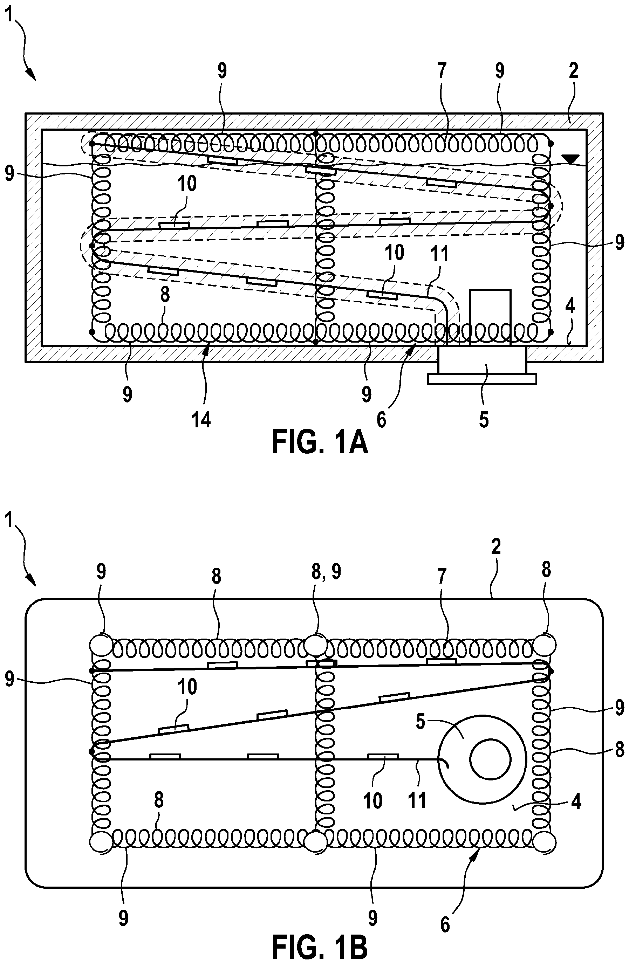

Figur 1 zeigt in Figur 1A eine vereinfachte Schnittdarstellung einer Tankvorrichtung 1 eines hier nicht näher dargestellten Abgasnachbehandlungssystems und in Figur 1B eine Draufsicht auf die Tankvorrichtung 1.

Die Tankvorrichtung 1 umfasst einen Tank 2, in welchem ein insbesondere flüssiges Abgasnachbehandlungsmittel aufbewahrt ist oder aufbewahrt werden kann. Einem Tankboden 4 des Tanks 2 ist ein Entnahmemodul 5 zugeordnet, mittels dessen das flüssige Abgasnachbehandlungsmittel aus dem Tank 2 entnommen werden kann. Dazu weist das Entnahmemodul 5 neben einer Entnahmeöffnung insbesondere auch eine Fördereinrichtung zum Ansaugen und Fördern des flüssigen Abgasnachbehandlungsmittels auf.

Weiterhin ist in dem Tank 2 eine Heizvorrichtung 6 angeordnet. Die Heizvorrichtung 6 weist einen Träger 7 auf, der aus mehreren Tagelementen 8 hergestellt ist. Vorliegend sind die Tragelemente 8 als Federteile 9 ausgebildet. Die Federteile 9 sind an ihren Enden gelenkig miteinander verbunden und als Druckfedern ausgebildet. Dabei sind die Tragelemente 8 außerdem aus einem wärmeleitfähigen Material gefertigt.

An dem Träger 7 sind mehrere Heizelemente 10 angeordnet, die als elektrische Heizelemente ausgebildet sind, insbesondere als Widerstandsheizelemente. Die Heizelemente 10 sind dabei vorliegend an einem Heizband 11 angeordnet, dass elektrisch mit dem Entnahmemodul 5 verbunden ist. Das Heizelement 11 ist an mehreren Stellen mit den Träger 7 verbunden, sodass das Heizband 11 in dem Tank 2 durch die federnden Tragelemente 8 aufgespannt wird, sodass sich ein großflächiger Heizbereich in dem Tank 2 ergibt, der vorliegend durch einen gestrichelt angedeuteten Bereich gezeigt ist. Innerhalb des Heizbereichs ist auch gefrorenes Abgasnachbehandlungsmittel jederzeit auftaubar und damit für das Entnahmemodul 5 verfügbar. Dadurch, dass das Heizband 11 zu dem Entnahmemodul 5 führt ist vorliegend außerdem der Vorteil erreicht, dass aufgetautes Abgasnachbehandlungsmittel direkt zu dem Entnahmemodul 5 durch den aufgetauten Kanal in dem gefrorenen Abgasnachbehandlungsmittel fließt.

Figur 1B zeigt die Tankvorrichtung 1 in einer Draufsicht, aus welcher ersichtlich ist, dass das Heizband 11 bevorzugt nicht nur in einer vertikalen Ebene serpentinenartig geführt ist, wie im Ausführungsbeispiel von Figur 1A gezeigt, sondern optional beziehungsweise bevorzugt auch in einer horizontalen Ebene serpentinenartig verläuft, um ein noch größeres Volumen in dem Tank 2 zu erreichen und auftauen zu können.

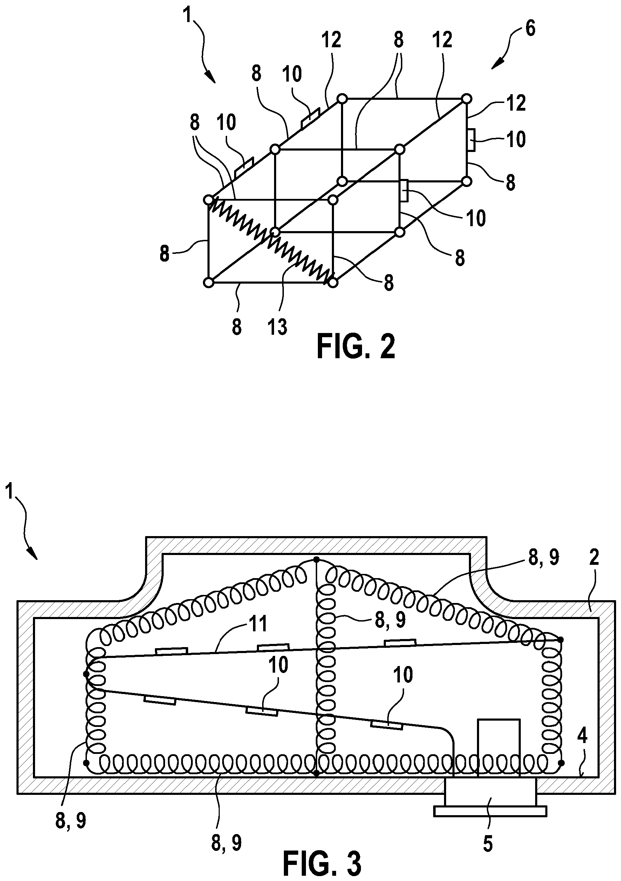

Figur 2 zeigt ein weiteres Ausführungsbeispiel der Tankvorrichtung 1, wobei hier nur die Heizvorrichtung 6 dargestellt ist, die sich von dem vorhergehenden Ausführungsbeispiel unterscheidet. Dabei zeigt Figur 2 grundsätzlich den Aufbau der Heizvorrichtung 6 mit den Tragelementen 8, die an ihren Enden gelenkig, in Figur 2 durch Knotenpunkte gezeigt, miteinander verbunden sind, um eine dreidimensionale Struktur, die einem Raumgitter entspricht, zu bilden. Im vorhergehenden Ausführungsbeispiel sind die Tragelemente 8 jeweils als Federteile 9 ausgebildet. Alternativ dazu ist gemäß dem Ausführungsbeispiel von Figur 2 vorgesehen, dass die Tragelemente 8 als stabförmige steife Tragteile 12 ausgebildet sind. Dabei sind bevorzugt entweder die horizontalen oder die vertikal ausgerichteten Tragelemente 8 als Tragteile 12 ausgebildet und die jeweils verbleibenden Tragelemente 8 als Federteile 9. Bevorzugt sind alle Tragelemente 8 als Tragteile 12 ausgebildet, die an ihren Enden gelenkig miteinander verbunden sind. In diesem Fall ist dann zusätzlich zumindest ein Federelement 13 vorgesehen, dass zwischen zumindest zwei Tragelementen 8, insbesondere zwischen Gelenkpunkten, als Druckfeder vorgespannt gehalten ist, um diese auseinander wegzubewegen, wodurch die Gitterstruktur aufgestellt wird. Durch das Vorsehen der Tragteile 12 wird dabei erreicht, dass die Gelenke jeweils einen festen Abstand zueinander aufweisen. Bei einer Ausführungsform mit Federteilen, wie sie in Figur 1 gezeigt ist, weist der Träger 7 bevorzugt Abstandshalter 14 auf, die einen minimalen Abstand oder einen Maximalen Abstand zwischen den Tragelementen 8 definiert, um eine vorgestimmte Ausgangsform oder Endform des Trägers 7 vorzugeben. So können die Abstandshalter 14 beispielsweise durch die Federteile 9 selbst insbesondere in der Funktion als Minimalabstandshalter, ausgebildet sein.

Weiterhin ist es denkbar, die Heizelemente 10 nicht an einem separaten Heizband 11, sondern direkt an den Tragelementen 8 anzuordnen, insbesondere an zumindest einem vertikal ausgerichteten und/oder zumindest an einem horizontal ausgerichteten Tragteil 12. Auch ist denkbar, die Heizelemente 10 direkt an den Gelenken anzuordnen.

Figur 3 zeigt ein weiteres Ausführungsbeispiel der Tankvorrichtung 1, das sich von dem ersten Ausführungsbeispiel dadurch unterscheidet, dass der Tank eine Kontur aufweist, die von einer Rechteckform abweicht. Wird in diesem Tank 2 die aus Figur 1 bekannte Heizvorrichtung 6 eingesetzt, ergibt sich der Vorteil, dass sich diese selbsttätig an die Kontur des Tanks durch die Federwirkung und die Flexibilität des Trägers 7 anpasst und dadurch eine einfache Montage und ein großes Auftauvolumen in dem Tank 2 gewährleistet.

Durch die vorteilhafte Ausbildung der Tragelemente 8 aus einem wärmeleitfähigen Material wird außerdem erreicht, dass auch in dem von den Heizelementen 10 beabstandeten Bereichen Wärme in das gegebenenfalls gefrorene Abgasnachbehandlungsmittel eingebracht wird. Ein kontinuierlicher Wärmeeintrag in das gesamte oder nahezu gesamte Tankfüllung gewährleistet, der sicherstellt, dass das Tankvolumen in allen Fahrzeugschräglagen aufgetaut werden kann. Alternativ zu dem beschriebenen Ausführungsbeispielen mit elektrischen Heizelementen 10 ist es auch denkbar, Flüssigkeitsheizelemente vorzusehen, die von einer Heizflüssigkeit durchströmt werden, um das Tankvolumen insbesondere das Abgasnachbehandlungsmittel aufzutauen.

## Patentansprüche

1. Heizvorrichtung (6) für einen Tank (2) eines Abgasnachbehandlungsmittelsystems, mit einem Träger (7) und mit mehreren an dem Träger (7) angeordneten Heizelementen (10), **dadurch gekennzeichnet, dass** der Träger (7) mehrere Tragelemente (8) aufweist, die gelenkig miteinander verbunden sind, und wenigstens ein Federelement (13), das zumindest zwei der Tragelemente (8) mit einer Federkraft beaufschlagt.

2. Heizvorrichtung nach Anspruch 1, **dadurch gekennzeichnet, dass** jeweils mindestens eines der Tragelemente (8) einen Abstandshalter (14) bildet oder dass zumindest zwei der Tragelemente (8) durch zumindest einen Abstandshalter (14) miteinander verbunden sind.

3. Heizvorrichtung nach einem der vorhergehenden Ansprüche, **dadurch gekennzeichnet, dass** der jeweilige Abstandshalter (14) als Minimalabstandshalter ausgebildet ist.

4. Heizvorrichtung nach einem der vorhergehenden Ansprüche, **dadurch gekennzeichnet, dass** der jeweilige Abstandshalter (14) als Maximalabstandshalter ausgebildet ist.

5. Heizvorrichtung nach einem der vorhergehenden Ansprüche, **dadurch gekennzeichnet, dass** an mehreren der Tragelementen (8), insbesondere an jedem Tragelement (8), jeweils zumindest eines der Heizelemente (10) angeordnet ist.

6. Heizvorrichtung nach einem der vorhergehenden Ansprüche, **dadurch gekennzeichnet, dass** zumindest eines der Heizelemente (10) als elektrisches Heizelement (10) ausgebildet ist.

7. Heizvorrichtung nach einem der vorhergehenden Ansprüche, **dadurch gekennzeichnet, dass** mehrere Heizelemente (10) an einem Heizband (11) angeordnet sind, wobei das Heizband (11) mit mehreren der Tragelemente (8) verbunden ist.

8. Heizvorrichtung nach einem der vorhergehenden Ansprüche, **dadurch gekennzeichnet, dass** das Federelement (14) als Schraubenfeder ausgebildet ist.

9. Heizvorrichtung nach einem der vorhergehenden Ansprüche, **dadurch gekennzeichnet, dass** zumindest eines der Tragelemente (8) als steifes Trägerteil (12) ausgebildet ist.

10. Heizvorrichtung nach einem der vorhergehenden Ansprüche, **dadurch gekennzeichnet, dass** zumindest eines der Tragelemente (8) als elastisch verformbares Federteil (9) ausgebildet ist.

11. Tankvorrichtung (1) zur Aufbewahrung und Bereitstellung eines flüssigen Abgasnachbehandlungsmittels für ein Abgasnachbehandlungssystem einer Brennkraftmaschine, insbesondere eines Kraftfahrzeugs, mit einem Tank (2) und mit einer in dem Tank (2) angeordneten Heizvorrichtung (6) **gekennzeichnet, durch** die Ausbildung der Heizvorrichtung (6) nach einem oder mehreren Ansprüchen 1 bis 10.

## Claims

1. Heating device (6) for a tank (2) of an exhaust gas aftertreatment agent system, having a carrier (7) and having a plurality of heating elements (10) arranged on the carrier (7), **characterized in that** the carrier (7) has a plurality of carrying elements (8) which are connected to one another in an articulated manner, and at least one spring element (13) which applies a spring force to at least two of the carrying elements (8).

2. Heating device according to Claim 1, **characterized in that** in each case at least one of the carrying elements (8) forms a spacer (14), or **in that** at least two of the carrying elements (8) are connected to one another by at least one spacer (14).

3. Heating device according to either of the preceding claims, **characterized in that** the respective spacer (14) is configured as a minimum spacer.

4. Heating device according to one of the preceding claims, **characterized in that** the respective spacer (14) is configured as a maximum spacer.

5. Heating device according to one of the preceding claims, **characterized in that** at least one of the heating elements (10) is arranged in each case on a plurality of the carrying elements (8), in particular on each carrying element (8).

6. Heating device according to one of the preceding claims, **characterized in that** at least one of the heating elements (10) is configured as an electric heating element (10).

7. Heating device according to one of the preceding claims, **characterized in that** a plurality of heating elements (10) are arranged on a heater band (11), wherein the heater band (11) is connected to a plurality of the carrying elements (8).

8. Heating device according to one of the preceding claims, **characterized in that** the spring element (14) is configured as a helical spring.

9. Heating device according to one of the preceding claims, **characterized in that** at least one of the carrying elements (8) is configured as a stiff carrier part (12).

10. Heating device according to one of the preceding claims, **characterized in that** at least one of the carrying elements (8) is designed as an elastically deformable spring part (9).

11. Tank device (1) for storing and providing a liquid exhaust gas aftertreatment agent for an exhaust gas aftertreatment system of an internal combustion engine, in particular of a motor vehicle, having a tank (2) and having a heating device (6) arranged in the tank (2), **characterized by** the configuration of the heating device (6) according to one or more of Claims 1 to 10.

## Revendications

1. Dispositif de chauffage (6) pour un réservoir (2) d'un système d'agent de post-traitement de gaz d'échappement, comprenant un support (7) et plusieurs éléments chauffants (10) disposés sur le support (7), **caractérisé en ce que** le support (7) présente plusieurs éléments de support (8) qui sont reliés les uns aux autres de manière articulée, et au moins un élément à ressort (13) qui sollicite au moins deux des éléments de support (8) avec une force de ressort.

2. Dispositif de chauffage selon la revendication 1, **caractérisé en ce que** respectivement au moins l'un des éléments de support (8) forme un écarteur (14) ou **en ce qu'**au moins deux des éléments de support (8) sont reliés l'un à l'autre par au moins un écarteur (14).

3. Dispositif de chauffage selon l'une quelconque des revendications précédentes, **caractérisé en ce que** l'écarteur respectif (14) est réalisé comme un écarteur minimal.

4. Dispositif selon l'une quelconque des revendications précédentes, **caractérisé en ce que** l'écarteur (14) respectif est réalisé comme un écarteur maximal.

5. Dispositif selon l'une quelconque des revendications précédentes, **caractérisé en ce que** sur plusieurs des éléments de support (8), en particulier sur chaque élément de support (8), respectivement au moins l'un des éléments chauffants (10) est disposé.

6. Dispositif de chauffage selon l'une quelconque des revendications précédentes, **caractérisé en ce qu'**au moins l'un des éléments chauffants (10) est réalisé comme un élément chauffant électrique (10).

7. Dispositif de chauffage selon l'une quelconque des revendications précédentes, **caractérisé en ce que** plusieurs éléments chauffants (10) sont disposés sur un ruban de chauffe (11), le ruban de chauffe (11) étant relié à plusieurs des éléments de support (8).

8. Dispositif de chauffage selon l'une quelconque des revendications précédentes, **caractérisé en ce que** l'élément de ressort (14) est réalisé comme un ressort cylindrique.

9. Dispositif de chauffage selon l'une quelconque des revendications précédentes, **caractérisé en ce qu'**au moins l'un des éléments de support (8) est réalisé comme une pièce de support (12) rigide.

10. Dispositif de chauffage selon l'une quelconque des revendications précédentes, **caractérisé en ce qu'**au moins l'un des éléments de support (8) est réalisé comme une pièce à ressort (9) à déformation élastique.

11. Dispositif de réservoir (1) pour stocker et fournir un agent liquide de post-traitement de gaz d'échappement pour un système de post-traitement de gaz d'échappement d'un moteur à combustion interne, en particulier d'un véhicule automobile, comprenant un réservoir (2) et un dispositif de chauffage (6) disposé dans le réservoir (2), **caractérisé par** la réalisation du dispositif de chauffage (6) selon une ou plusieurs des revendications 1 à 10.
